# EUROPÄISCHE PATENTSCHRIFT

(11) **EP 1 478 562 B1**
(45) Veröffentlichungstag und Bekanntmachung des Hinweises auf die Patenterteilung: **28.09.2005**
(21) Anmeldenummer: 03742939.6
(22) Anmeldetag: 15.02.2003
(51) Int. Cl.: B62D 21/11

(54) **AUS STAHL-HOHLPROFILEN GEBILDETE TRAGSTRUKTUR FÜR FAHRZEUGE**
SUPPORTING STRUCTURE FOR VEHICLES, MADE OF HOLLOW STEEL PROFILES
STRUCTURE PORTEUSE POUR VEHICULES, CONSTITUEE DE PROFILES D'ACIER CREUX

(30) Priorität: 28.02.2002 DE 10208778
(43) Veröffentlichungstag der Anmeldung: 24.11.2004
(73) Patentinhaber: ThyssenKrupp Stahl AG, 47166 Duisburg (DE)
(72) Erfinder: GRÜNEKLEE, Axel, 47249 Duisburg (DE); PATBERG, Lothar, 52074 Aachen (DE); PHILIPP, Dariush, 47800 Krefeld (DE)
(74) Vertreter: Cohausz & Florack
(86) Internationale Anmeldenummer: PCT/EP2003/001530
(87) Internationale Veröffentlichungsnummer: WO 2003/072421

(56) Entgegenhaltungen:
- GB-A- 529 631
- US-A- 4 986 597

## Beschreibung

Die Erfindung betrifft eine aus Stahl-Hohlprofilen gebildete Tragstruktur für Fahrzeuge mit einem Längsträger aus mindestens zwei parallel miteinander verbundenen Hohlprofilen, die sich vor der Tragstruktur der Fahrgastzelle in ein erstes am Seitenschweller abgestütztes Hohlprofil und ein zweites an anderen Teilen der Tragstruktur abgestütztes Hohlprofil verzweigen.

Tragstrukturen dieser Art sind in verschiedenen Ausführungen bekannt. Die US-A 4986597 beschreibt eine Konstruktion aus Aluminium-Strangpressprofilen mit einem aus zwei Hohlprofilen bestehenden Längsträger, wobei die Hohlprofile sowohl in den Schwellerbereich als auch in die A-Säule der Tragstruktur der Fahrgastzelle geführt werden. Ein zweiter Träger reicht von der A-Säule in den Schwellerbereich, so dass insgesamt sowohl der Längsträger als auch die A-Säule und der Schweller aus einer doppelten Trägerkonstruktion bestehen. Durch eine derartige Konstruktion wird ein günstiger Kraftverlauf innerhalb einer Tragstruktur erzielt und es werden keine separaten Knotenstrukturen benötigt. Nachteilig ist die starke Umlenkung der im Crashfall auftretenden Längskräfte in die A-Säule. Weiterhin ist die Aluminium-Strangpress-Technologie für Stahlwerkstoffe im Automobilbau nicht einsetzbar, so dass eine Übertragbarkeit der Erkenntnisse auf Stahlkonstruktionen nicht gegeben ist.

Bei einer anderen ähnlichen Tragstruktur (GB-A-529,631, nächstliegender stand der Technik), deren Hohlprofile aber aus halbschalenförmigen Profilen zusammengesetzt sind, verzweigt sich ein einzelner Längsträger in Richtung der Fahrgastzelle in ein erstes in den Seitenschweller der Tragstruktur der Fahrgastzelle übergehendes Hohlprofil und in ein zweites an anderen Teilen der Tragstruktur abgestütztes Hohlprofil. Von der Verzweigungsstelle aus ist also der Längsträger in Form eines einfachen Hohlprofils in Richtung des Stoßfängers fortgeführt. Im Crashfall wird deshalb der Längsträger auf seiner gesamten Länge bis zur Verzweigungsstelle verformt. Ein abgestufter Abbau der Aufprallenergie ist nicht vorgesehen.

In der EP 0 749892 B1 wird ein Verfahren zur Herstellung von Trägern einer Tragstruktur von Fahrzeugen beschrieben, die unter Verwendung der Innenhochdruckumform- Technologie (IHU) aus wenigstens zwei in Teilbereichen formschlüssig miteinander verbundenen Hohlprofilen bestehen. Je nach lokal auftretender Belastung besteht der Längsträger dieser Tragstruktur aus den in der oben beschriebenen Weise formschlüssig miteinander verbundenen Hohlprofilen oder aus einem einzeln geführten Hohlprofil. Die Träger können aus Stahl oder Leichtmetall gefertigt sein. Das IHU-Verfahren impliziert eine Materialdopplung an den Verbindungsflächen der formschlüssig miteinander verbundenen Hohlprofile, so dass die Konstruktion bei Verwendung von Stahlwerkstoffen ein hohes Gewicht aufweist. In der Druckschrift finden sich keine Aussagen über den Kraftverlauf in der Tragstruktur im Crashfall.

In der DE 4208700 C2 wird ein aus zwei Hohlprofilen mit rechteckigem Querschnitt bestehender Seitenschweller beschrieben, der sich in Richtung des Vorderwagens teilt und in eine quer zur Fahrtrichtung liegende Motorraumstrebe und in einen ebenfalls quer zur Fahrtrichtung liegenden Spritzwandträger übergeht. An der Motorraumstrebe und dem Spritzwandquerträger stützt sich ein auf Höhe des Motorraums angeordneter Seitenrahmen ab, der bei einer Belastung in Fahrzeuglängsrichtung infolge eines Crashs eine Krafteinleitung unter Umlenkung der Längskraft in den Seitenschweller gewährleistet. Neben Aluminium können auch andere Werkstoffe zum Einsatz kommen. Nachteilig auch bei dieser Konstruktion ist ihr hohes Gewicht insbesondere bei der Verwendung von Stahlwerkstoffen, da u.a. im Bereich des Seitenschwellers eine Materialdopplung in Kauf genommen wird.

In der WO 92/11159 schließlich wird ein Heckabschluß einer Fahrzeugkarosserie bestehend aus zwei übereinander angeordneten Querträgern beschrieben, wobei die in Fahrzeuglängsrichtung gebogenen Enden des unteren Querträgers jeweils mit einem Pralltopf verbunden sind, der den hinteren Abschluss eines Längsträgers bildet. Dabei handelt es sich offenbar um einen aus einem einfachen Hohlprofil bestehenden Längsträger. Folglich wird die bei einem Heckaufprall in den Längsträger eingeleitete Crashenergie gleichmäßig über die gesamte Länge des Längsträgers absorbiert bzw. an die Fahrgastzelle weitergegeben, da keine zusätzlichen Versteifungen der Konstruktion zum Schutz der Fahrgastzelle realisiert sind.

Der Erfindung liegt die Aufgabe zugrunde, eine Tragstruktur für Fahrzeuge der eingangs genannten Art zu schaffen, die unter Verwendung hochfester Stahlwerkstoffe bei niedrigem Gesamtgewicht aus einer geringen Teilezahl besteht und gleichzeitig ein verbessertes Crashverhalten aufweist.

Diese Aufgabe wird mit einer Tragstruktur der eingangs genannten Art dadurch gelöst, dass nur genau eins der mindestens zwei Hohlprofile des Längsträgers in Form eines einfachen Hohlprofils in Richtung des Stoßfängers fortgeführt ist. Durch die Fortführung des Längsträgers in Richtung des Stoßfängers kann der sonst übliche Pralltopf entfallen, da er integraler Bestandteil des Längsträgers geworden ist. An der Stirnseite seines einfach geführten Hohlprofils kann der Längsträger über einen Flansch direkt mit dem Stoßfänger verbunden sein, wodurch die Zahl der benötigten Bauteile und damit auch das Gesamtgewicht reduziert ist. Bei einem Crash mit geringer Aufprallgeschwindigkeit kommt es zu einer gezielten Verformung des einfach geführten Hohlprofils, welches im Rahmen einer Reparatur kostengünstig ausgetauscht werden kann. Im Falle höherer Aufprallgeschwindigkeiten kommt der steifere Teil des Längsträgers mit seinen zu einem Mehrkammerprofil verbundenen Hohlprofilen zum Schutz der Insassen zum Tragen.

Nach einer Ausgestaltung der Erfindung ist das zweite Hohlprofil des Längsträgers an der Tunnelverstärkung der Tragstruktur der Fahrgastzelle abgestützt. Somit werden die bei einem Crash auftretenden hohen Kräfte in der gewünschten günstigen Weise auf die Tragstruktur der Fahrgastzelle des Fahrzeugs verteilt. Da zudem eine starke Kraftumlenkung beispielsweise in einen vertikal angeordneten Träger vermieden wird und sich die Profile aneinander abstützen, wird die Gefahr des Verformens der Tragstruktur im Crashfall vermindert.

Eine weitere Ausgestaltung der Erfindung sieht vor, dass die parallelen Hohlprofile stoffschlüssig miteinander verbunden sind. Dies kann mithilfe eines Schweißverfahrens realisiert sein, wobei sich der Einsatz einer Liniennaht, z.B. durch Laserstrahlschweißen, als besonders vorteilhaft erweist. Die Schweißung erfolgt über die gesamte Länge des Längsträgers. Eine vorteilhafte Ausgestaltung der Erfindung sieht zudem die Ausbildung der Schweißnaht als Step-Naht vor. Somit ist eine flexible Anpassung des Schweißprozesses an die fertigungstechnischen Anforderungen des späteren Anwenders möglich.

Zum Zwecke der Gewichtsreduzierung kann eine Materialdopplung zwischen den beiden Hohlprofilen des ein Mehrkammerprofil bildenden Längsträgers dadurch vermieden werden, dass die beiden Hohlprofile zwischen sich eine gemeinsame Trennwand haben. Konstruktiv lässt sich das dadurch verwirklichen, dass eines der beiden Hohlprofile auf der dem jeweils anderen Hohlprofil zugewandten Seite vor dem Fügeprozess beschnitten wird oder dadurch, dass anstatt eines geschlossenen Hohlprofils ein U-Profil verwendet wird, an das sich kurz vor der Verzweigung des Längsträgers ein geschlossenes Hohlprofil anschließt. Die Verwendung eines beschnittenen Hohlprofils oder eines U-Profils ermöglicht eine Gewichtsreduzierung bei gleichzeitig kaum veränderter Steifigkeit und der Tragstruktur. Ferner ergibt sich eine Gewichtsreduzierung aufgrund der nicht mehr notwendigen Verstärkung von Seitenschwellern und A-Säule.

Die Erfindung erlaubt den Einsatz verschiedener Profilquerschnitte. Bevorzugt werden mehreckige, insbesondere rechteckige Profilquerschnitte. Je nach seitlichem bzw. vertikalem Versatz des Längsträgers relativ zum Seitenschweller und zur Tunnelverstärkung der Fahrgastzelle werden die Hohlprofile übereinander oder nebeneinander angeordnet. Im Falle mehreckiger Profilquerschnitte ist auch eine schräge Anordnung möglich. Als besonders vorteilhaft erweist es sich, wenn die Hohlprofile eines Längsträgers unterschiedliche Querschnitte aufweisen. Dies ermöglicht eine noch flexiblere Anpassung an die konstruktiven Vorgaben des Anwenders. Darüber hinaus kann somit das Widerstandsmoment des Längsträgers im Hinblick auf die gewünschten Crasheigenschaften der Tragstruktur exakt eingestellt werden.

Ein in Richtung der Fahrgastzelle kontinuierlich ansteigendes Widerstandsmoment des Längsträgers führt zu einer zunehmenden Steifigkeit der Tragstruktur in dieser Richtung, was im Crashfalle abhängig von der Aufprallgeschwindigkeit eine Minimierung des Reparaturaufwandes bzw. einen sicheren Insassenschutz ermöglicht. Dies kann auf dreierlei Weise realisiert sein:
1.Wenigstens eines der Hohlprofile des Längsträgers weist einen in Richtung der Fahrgastzelle sich vergrößernden Querschnitt auf. Hierzu eignet sich der Einsatz eines konisch geformten Hohlprofils.
2.Die Materialstärke wenigstens eines der Hohlprofile des Längsträgers nimmt in Richtung der Fahrgastzelle zu.
3.Die Güte des verwendeten Stahls nimmt bei wenigstens einem der Hohlprofile des Längsträgers in Richtung der Fahrgastzelle zu.

Eine zunehmende Materialstärke und Stahlgüte lässt sich fertigungstechnisch durch den Einsatz von Tailored Blanks zur Herstellung eines oder beider Hohlprofile umsetzen.

Eine besonders vorteilhafte Ausgestaltung sieht schließlich vor, dass wenigstens eines der Hohlprofile aus einem flexibel gewalzten Blech gefertigt ist. Dadurch wird eine stufenlose Änderung der Materialstärke erzielt.

Im folgenden wird die Erfindung anhand einer ein Ausführungsbeispiel darstellenden Zeichnung erläutert. Im einzelnen zeigen:
- Fig. 1: eine Tragstruktur für Fahrzeuge mit zwei nebeneinander angeordneten und an Seitenschweller und Tunnelverstärkung einer Fahrgastzelle angeschlossenen Längsträgern in Draufsicht in stark schematisierter Darstellung,
- Fig. 2: einen Teil der Tragstruktur der Fig. 1, und zwar einen Längsträger mit über sich verzweigende Abschnitte angebundenen Seitenschweller und Tunnelverstärkung in perspektivischer Ansicht,
- Fig. 3: den Längsträger gemäß Fig. 2 ohne sich verzweigende Abschnitte mit einfach fortgeführtem Hohlprofil und stirnseitig montiertem Stoßfänger in perspektivischer Ansicht,
- Fig. 4 a, b: den Längsträger gemäß Fig. 2 in Seitenansicht mit durchgängiger Schweißnaht und Step-Schweißnaht,
- Fig. 5: einen Längsträger unter Verwendung eines U-Profils in Seitenansicht,
- Fig. 6: den Längsträger gem. Fig. 5 im Querschnitt nach Linie I-I der Fig. 5,
- Fig. 7: den Längsträger gem. Fig. 5 im Querschnitt nach Linie II-II der Fig. 5,
- Fig. 8 a-e: aus jeweils gleichen Hohlprofilen zusammengesetzte Längsträger gemäß Fig. 2 mit Schweißnähten im Querschnitt,
- Fig. 9 a-c: aus jeweils unterschiedlichen Hohlprofilen zusammengesetzte Längsträger gemäß Fig. 2 mit Schweißnähten im Querschnitt,
- Fig. 10: einen Längsträger mit einem sich in Richtung der Fahrgastzelle kontinuierlich vergrößernden Profilquerschnitt,
- Fig. 11: den Längsträger gem. Fig. 10 im Querschnitt nach Linie III-III der Fig. 10 und
- Fig. 12: den Längsträger gem. Fig. 10 im Querschnitt nach Linie IV-IV der Fig. 10.

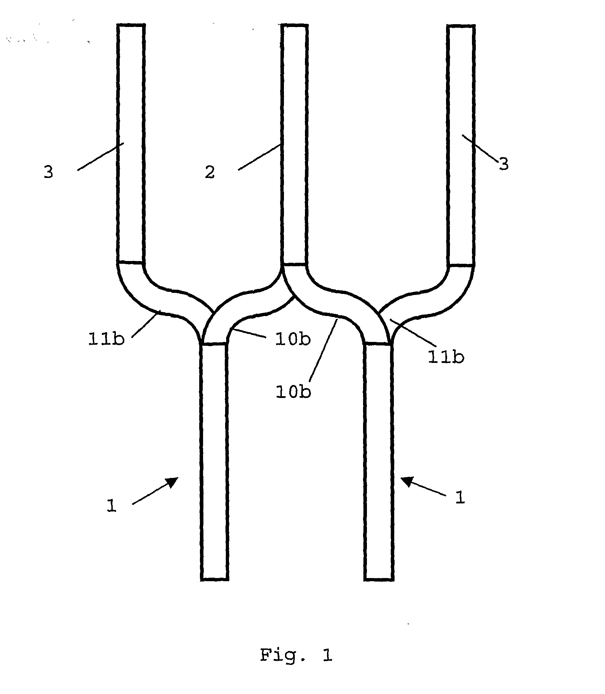

Die in Fig. 1 schematisiert in Draufsicht teilweise dargestellte Tragstruktur eines Fahrzeuges weist zwei Längsträger 1 des vorderen oder hinteren Teils eines Fahrzeuges, eine Tunnelverstärkung 2 und zwei Seitenschweller 3 der Fahrgastzelle auf. Die Längsträger 1 sind über sich verzweigende, gekrümmte Abschnitte 10b, 11b aus Hohlprofilen 10, 11 an der Tunnelverstärkung 2 und den Seitenschwellern 3 abgestützt. Dadurch, dass bei der Erfindung im Falle eines Crashs auch die Tunnelverstärkung 2 für die Ableitung von Längskräften herangezogen wird, ergibt sich eine Verteilung der Kräfte auf diese drei in Fahrzeuglängsrichtung verlaufenden Teile der Tragstruktur im Bereich der Fahrgastzelle bzw. eine Teilentlastung der Seitenschweller.

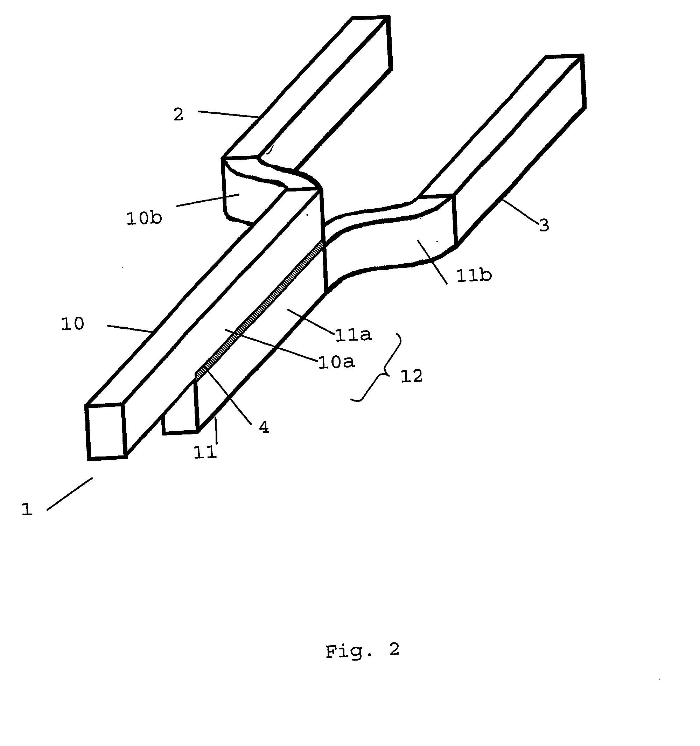

Wie die perspektivische Darstellung der Fig. 2 zeigt, besteht der Längsträger 1 aus zwei übereinander angeordneten Hohlprofilen 10, 11. Diese weisen geradlinig verlaufende Abschnitte 10a, 11a auf, die sich in Richtung der Fahrgastzelle in die beiden gekrümmten Abschnitte 10b, 11b verzweigen. Diese Abschnitte 10b, 11b sind stirnseitig mit der Tunnelverstärkung 2 und einem Seitenschweller 3 der Tragstruktur der Fahrgastzelle verbunden.

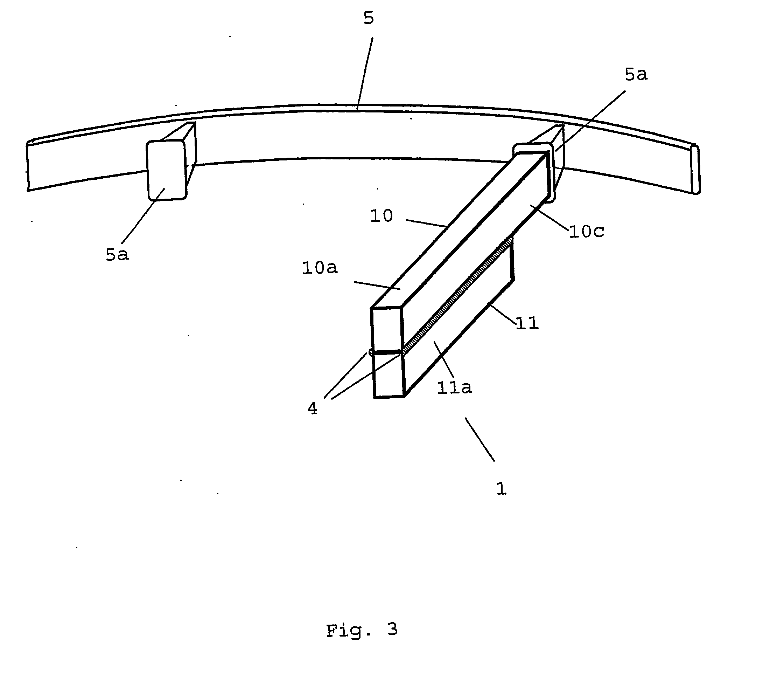

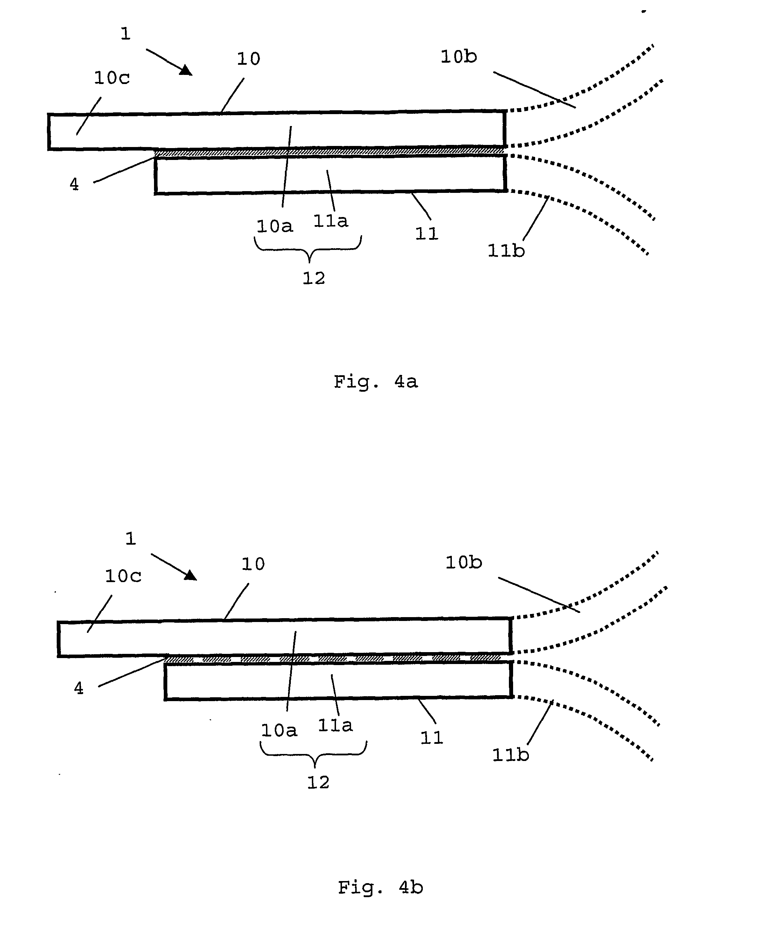

Wie der ebenfalls perspektivischen Darstellung der Fig. 3 zu entnehmen ist, weist nur das Hohlprofil 10 einen in Richtung des Stoßfängers 5 fortgeführten Abschnitt 10c auf, welcher stirnseitig mit einem in Fahrzeuglängsrichtung angeordneten Flansch 5a des Stoßfängers 5 verbunden ist. Der einfach geführte Abschnitt 10c des Hohlprofils 10 kann so den Pralltopf ersetzen. Die Hohlprofile sind in ihren parallel verlaufenden Abschnitten 10a, 11a beidseitig durch Schweißnähte 4 zu einem Mehrkammerprofil 12 verbunden. Wie die Figuren 4a und 4b zeigen, kann eine durchgängige Schweißnaht 4 (Fig. 4a) oder eine Step-Schweißnaht 4 (Fig. 4b) vorgesehen sein.

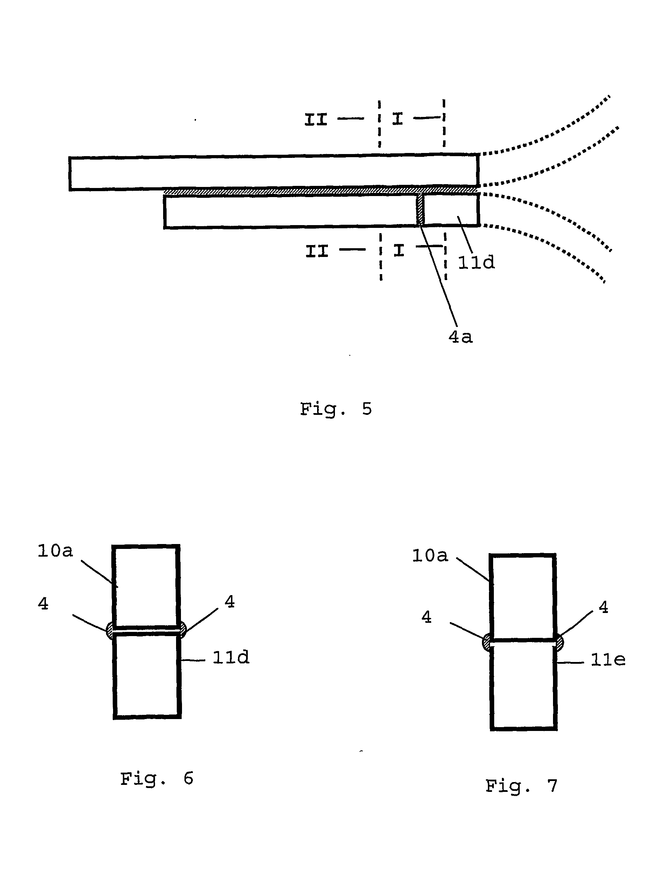

Die Verwendung eines U-Profils 11e anstelle eines geschlossenen Hohlprofils über annähernd die gesamte Länge des Mehrkammerprofils 12 ist in den Figuren 5 bis 7 dargestellt. Erst kurz vor der Verzweigung der Hohlprofile 10, 11 ist das U-Profil 11e durch ein geschlossenes Hohlprofil 11d ersetzt. Die Verbindung des U-Profils 11e mit dem Hohlprofil 11d ist durch eine weitere Schweißnaht 4a realisiert.

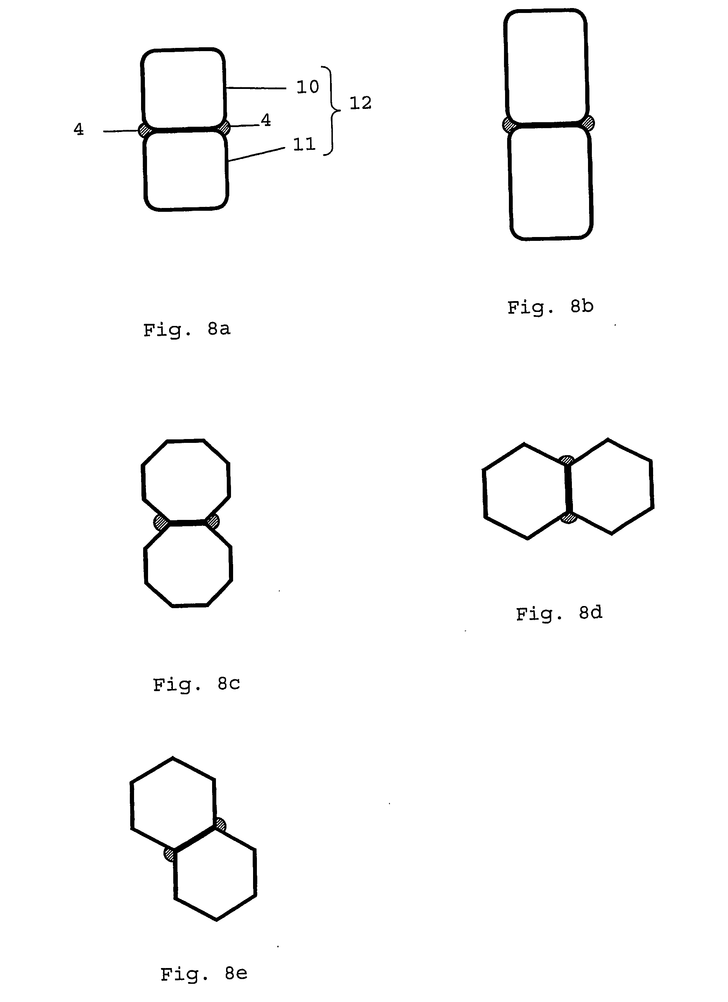

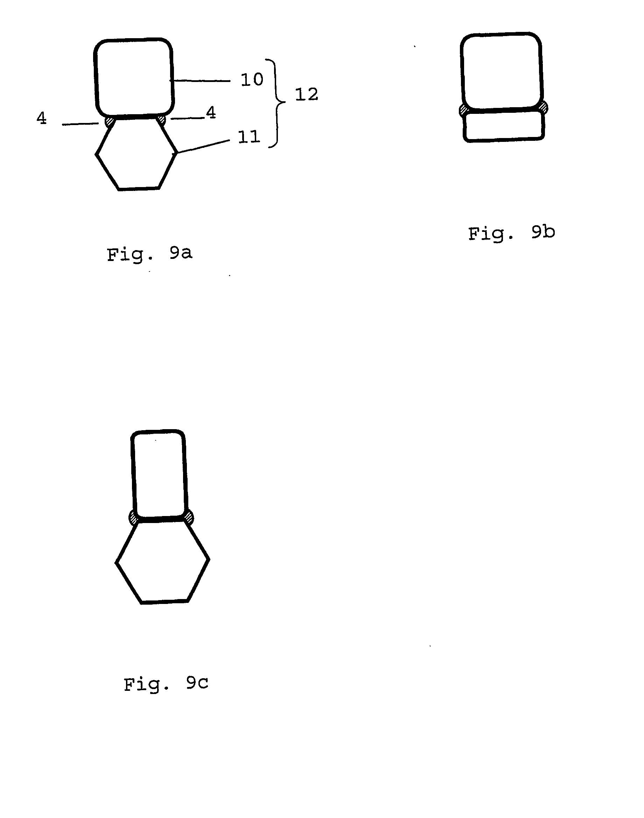

Wie in den Figuren 8a bis 8e gezeigt, lassen sich Längsträger aus Hohlprofilen mit unterschiedlichen Querschnittgeometrien mit dem Ziel zusammenstellen, sie räumlich optimal unterzubringen. Durch die in den Figuren 9a bis 9c im Querschnitt dargestellten, sich jeweils aus verschiedenen Hohlprofilen zusammensetzenden Längsträger lässt sich die Flexibilität der räumlichen Gestaltung des Längsträgers zusätzlich erhöhen.

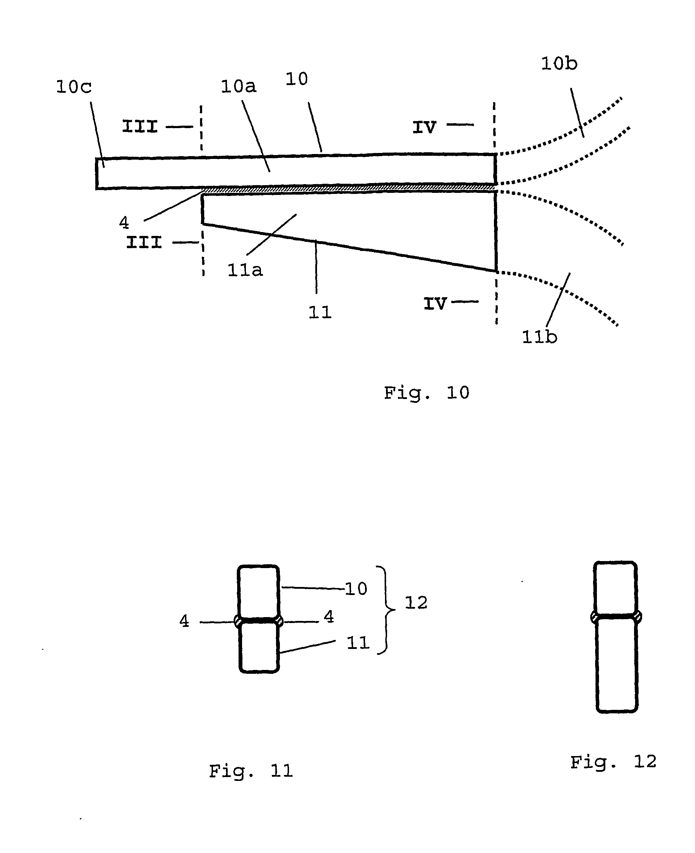

Bei dem in Figur 10 gezeigten Längsträger weist das Hohlprofil 11 einen sich in Richtung der Fahrgastzelle kontinuierlich vergrößernden Profilquerschnitt auf. Folglich nimmt das Widerstandsmoment des Längsträgers 1 in dieser Richtung kontinuierlich zu, was zu den gewünschten günstigen Crasheigenschaften der Tragstruktur führt. Die Figuren 11 und 12 zeigen den Querschnitt des Mehrkammerprofils 12 an dem der Fahrgastzelle abgewandten Ende (Fig. 11) des Mahrkammerprofils sowie unmittelbar an der Stelle der Verzweigung der Hohlprofile (Fig. 12).

## Patentansprüche

1. Aus Stahl-Hohlprofilen gebildete Tragstruktur für Fahrzeuge mit einem Längsträger (1) aus mindestens zwei parallelen, miteinander verbundenen Hohlprofilen (10a, 11a), die sich vor der Tragstruktur der Fahrgastzelle in ein erstes am Seitenschweller der Tragstruktur der Fahrgastzelle abgestütztes Hohlprofil (11b) und ein zweites (10b) an anderen Teilen der Tragstruktur der Fahrgastzelle abgestütztes Hohlprofil verzweigen,
**dadurch gekennzeichnet, daß** nur genau eins der mindestens zwei Hohlprofile (10a, 11a) des Längsträger (1) in Form eines einfachen Hohlprofils (10c) in Richtung des Stoßfängers (5) fortgeführt ist.

2. Tragstruktur nach Anspruch 1,
**dadurch gekennzeichnet, daß** das zweite Hohlprofil (10b) an einer Tunnelverstärkung der Tragstruktur abgestützt ist.

3. Tragstruktur nach Anspruch 1 oder 2,
**dadurch gekennzeichnet, daß** die Hohlprofile (10a, 11a) in Längsrichtung stoffschlüssig miteinander verbunden sind.

4. Tragstruktur nach Anspruch 3
**dadurch gekennzeichnet, daß** die stoffschlüssige Verbindung durch eine Schweißnaht (4) realisiert ist.

5. Tragstruktur nach Anspruch 4,
**dadurch gekennzeichnet, daß** die Schweißnaht (4) als Step-Schweißnaht ausgebildet ist.

6. Tragstruktur nach einem der Ansprüche 1 bis 5,
**dadurch gekennzeichnet, daß** eines der beiden Hohlprofile (10, 11) im Bereich der Schweißnaht (4) teilweise als U-Profil (11e) ausgebildet ist.

7. Tragstruktur nach einem der Ansprüche 1 bis 6,
**dadurch gekennzeichnet, daß** die Hohlprofile (10, 11) einen mehreckigen Querschnitt aufweisen, wobei die beiden Hohlprofile (10a, 11a) mit jeweils einer flachen Seite aufeinander liegen.

8. Tragstruktur nach einem der Ansprüche 1 bis 7,
**dadurch gekennzeichnet, daß** sich der Längsträger (1) aus Hohlprofilen mit unterschiedlichen Querschnitten zusammensetzt.

9. Tragstruktur nach einem der Ansprüche 1 bis 8,
**dadurch gekennzeichnet, daß** der Querschnitt wenigstens eines der Hohlprofile (10, 11) sich in Längsrichtung verändert.

10. Tragstruktur nach einem der Ansprüche 1 bis 9,
**dadurch gekennzeichnet, daß** wenigstens eines der Hohlprofile (10, 11) aus einem Tailored Blank gefertigt ist.

11. Tragstruktur nach Anspruch 9,
**dadurch gekennzeichnet, daß** die Hohlprofile (10, 11) unterschiedliche Stahlgüten aufweisen.

12. Tragstruktur nach Anspruch 9,
**dadurch gekennzeichnet, daß** die Hohlprofile (10, 11) unterschiedliche Materialstärken aufweisen.

13. Tragstruktur nach einem der Ansprüche 1 bis 12,
**dadurch gekennzeichnet, daß** wenigstens eines der Hohlprofile (10, 11) aus einem flexibel gewalzten Blech gefertigt ist.

## Claims

1. A support structure for vehicles, made from hollow steel sections, comprising a longitudinal member (1) made from at least two hollow sections (10a, 11a) which are interconnected in parallel, wherein said hollow sections (10a, 11a), in front of the support structure of the passenger compartment, bifurcate into a first hollow section (11b) supported by the lateral sill of the support structure of the passenger compartment, and a second hollow section (10b) supported by other parts of the support structure of the passenger compartment,
**characterised in that**
exactly only one of the at least two hollow sections (10a, 11a) of the longitudinal member (1) continues in the shape of a single hollow section (10c) in the direction of the bumper (5).

2. The support structure according to claim 1,
**characterised in that**
the second hollow section (10b) is supported by the tunnel reinforcement of the support structure.

3. The support structure according to claim 1 or 2,
**characterised in that**
the hollow sections (10a, 11a) are integrally interconnected in longitudinal direction.

4. The support structure according to claim 3,
**characterised in that**
the integral connection is achieved by means of a weld seam (4).

5. The support structure according to claim 4,
**characterised in that**
the weld seam (4) is a stepped weld seam.

6. The support structure according to any one of claims 1 to 5,
**characterised in that**
one of the two hollow sections (10, 11), in the region of the weld seam (4), is partially designed as a U-section (11e).

7. The support structure according to any one of claims 1 to 6,
**characterised in that**
the hollow sections (10, 11) comprise a polygonal cross-section, wherein the two hollow sections (10a, 11a) rest against each other on a flat side.

8. The support structure according to any one of claims 1 to 7,
**characterised in that**
the longitudinal member (1) is comprised of hollow sections of different cross-sections.

9. The support structure according to any one of claims 1 to 8,
**characterised in that**
the cross-section of at least one of the hollow sections (10, 11) changes in longitudinal direction.

10. The support structure according to any one of claims 1 to 9,
**characterised in that**
at least one of the hollow sections (10, 11) is made from a tailored blank.

11. The support structure according to claim 9,
**characterised in that**
the hollow sections (10, 11) comprise various steel grades.

12. The support structure according to claim 9,
**characterised in that**
the material thickness of the hollow sections (10, 11) varies.

13. The support structure according to any one of claims 1 to 12,
**characterised in that**
at least one of the hollow sections (10, 11) is made from a flexibly rolled sheet.

## Revendications

1. Structure porteuse constituée de profilés d'acier creux pour véhicules, avec un longeron (1) formé d'au moins deux profilés creux parallèles (10a, 11a) raccordés l'un à l'autre, qui se ramifient de la structure porteuse de la cellule de passager en un premier profilé creux (11b) soutenu sur le seuil latéral de la structure porteuse de la cellule de passager et en un second profilé creux (10b) soutenu sur d'autres parties de la structure porteuse de la cellule de passager, **caractérisée en ce que** seulement précisément un des au moins deux profilés creux (10a, 11a) du longeron (1) se poursuit sous la forme d'un profilé creux simple (10c) en direction du pare-chocs (5).

2. Structure porteuse selon la revendication 1, **caractérisée en ce que** le second profilé creux (10b) est soutenu sur un renfort de tunnel de la structure porteuse.

3. Structure porteuse selon l'une quelconque des revendications 1 ou 2, **caractérisée en ce que** les profilés creux (10a, 11a) sont raccordés l'un à l'autre dans la direction longitudinale par liaison par matériaux.

4. Structure porteuse selon la revendication 3, **caractérisée en ce que** la liaison par matériaux est réalisée par un cordon de soudage (4).

5. Structure porteuse selon la revendication 4, **caractérisée en ce que** le cordon de soudage (4) se présente sous la forme d'un cordon de soudage par points.

6. Structure porteuse selon l'une quelconque des revendications 1 à 5, **caractérisée en ce qu'**un des deux profilés creux (10, 11) se présente en partie sous la forme d'un profilé en U (11e) dans la zone du cordon de soudage (4).

7. Structure porteuse selon l'une quelconque des revendications 1 à 6, **caractérisée en ce que** les profilés creux (10, 11) présentent une section transversale polygonale, dans laquelle les deux profilés creux (10a, 11a) sont disposés l'un au-dessus de l'autre par respectivement un côté plat.

8. Structure porteuse selon l'une quelconque des revendications 1 à 7, **caractérisée en ce que** le longeron (1) se compose de profilés creux avec différentes sections transversales.

9. Structure porteuse selon l'une quelconque des revendications 1 à 8, **caractérisée en ce que** la section transversale d'au moins un des profilés creux (10, 11) varie dans la direction longitudinale.

10. Structure porteuse selon l'une quelconque des revendications 1 à 9, **caractérisée en ce qu'**au moins un des profilés creux (10, 11) est fabriqué à partir d'une ébauche sur mesure (tailored blank).

11. Structure porteuse selon la revendication 9, **caractérisée en ce que** les profilés creux (10, 11) présentent différentes qualités d'acier.

12. Structure porteuse selon la revendication 9, **caractérisée en ce que** les profilés creux (10, 11) présentent différentes épaisseurs de matériau.

13. Structure porteuse selon l'une quelconque des revendications 1 à 12, **caractérisée en ce qu'**au moins un des profilés creux (10, 11) est fabriqué à partir d'une tôle laminée de manière souple.
